# EUROPEAN PATENT APPLICATION

(11) **EP 2 883 805 A1**
(43) Date of publication of application: **17.06.2015**
(21) Application number: 13196773.9
(22) Date of filing: 11.12.2013
(51) Int. Cl.: B65C 3/06, B29C 63/42

(54) **A labelling unit and a method for applying a label onto a non-cylindrical label receiving portion of an article**

(71) Applicant: Sidel S.p.a. Con Socio Unico, Parma (IT)
(72) Inventor: Giuliani, Mattia, 43100 PARMA (IT); Deflorian, Antonio, 43100 PARMA (IT)
(74) Representative: D'Angelo, Fabio

(57) **Abstract**

There is described a labelling unit (15) to apply a label (2) onto a non-cylindrical label receiving portion (6) of an article (3); the labelling unit (15) comprises support means (20) and a receiving member (21) adapted to carry the article (3) on its top end (22) as well as to receive the label (2) on its lateral wall (23), and supported by the support means (20) in a translational manner along a given axis (F) between a raised position, in which it axially protrudes from the support means (20) and is adapted to receive the label (2) wrapped around its lateral wall (23), and a retracted position, in which it is housed within the support means (20) so as to permit insertion of the article (3) into the label (2) welded in an endless configuration; the receiving member (21) comprises at least two distinct sectors (36, 37), at least a first one of which movable with respect to the other transversely to the axis (F); the receiving member (21) is set in a first cylindrical configuration, during wrapping of the label (2) around its lateral wall (23), and, in a second non-cylindrical configuration by moving the first sector (36, 37) with respect to the other after the label (2) has been welded in the endless configuration and prior to inserting the article (3) into the endless label (2). (Figure 3)

## Description

The present invention relates to a labelling unit and a method to apply a label, in particular made of heat-shrinking film, onto a non-cylindrical receiving portion of an article, such as a bottle or a generic container.

More specifically, the present invention relates to a labelling unit and a method to apply labels onto bottles or containers having label receiving portions with oval cross-sections along planes orthogonal to their axes, which the following description will refer to, although this is in no way intended to limit the scope of protection as defined by the accompanying claims.

As it is generally known, the same type of labelling machine is currently used to apply tubular labels-commonly called "sleeve labels" - to containers or articles having circular or oval cross-sections along planes orthogonal to their axes.

These tubular labels are typically obtained by:
- cutting the web unwound from a supply roll into a plurality of rectangular or square labels;
- bending each label in a cylindrical configuration such that the opposite vertical edges overlap one another; and
- welding the overlapped edges of each cylindrical label.

All these operations are normally performed on the labelling machine, which also produces insertion of containers into the so formed tubular labels.

A heat-shrinking step is then performed on the containers exiting from the labelling machine to obtain shrinking and adhesion of the label to the container external surface, being this surface cylindrical or annular with an oval cross-section along a plane orthogonal to its axis.

The labelling machine basically comprises a carousel rotating about a vertical axis to define a circular path, along which it receives a succession of unlabelled containers and, then, a succession of rectangular or square labels from respective input wheels, produces application of the labels in a tubular configuration onto the respective containers and releases the labelled containers to an output wheel.

More specifically, the carousel comprises a number of labelling units which are equally spaced about the rotation axis, are mounted along a peripheral edge of the carousel and are moved by the latter along the above-mentioned circular path.

Each labelling unit comprises a bottom supporting assembly adapted to support the bottom wall of a relative container and an upper retainer adapted to cooperate with the top portion of such container to hold it in a vertical position during the rotation of the carousel about the vertical axis.

Each supporting assembly comprises a vertical hollow supporting mount, secured to a horizontal plane of a rotary frame of the carousel, and a cylindrical receiving member, engaging the supporting mount in sliding and rotating manner with respect to its axis, and adapted to carry a relative container on its top surface and a relative label on its lateral surface.

Each receiving member can be displaced between a raised position and a fully retracted position within the relative supporting mount.

In the raised position, each receiving member protrudes from a top surface of the relative supporting mount and is adapted to receive a relative label on its lateral surface from the label input wheel; in particular the label is wrapped around the receiving member such that the opposite vertical edges of the label overlap one another.

In order to produce this complete wrapping, the receiving member is rotated about its axis during the transfer of the label from the label input wheel.

In the fully retracted position, which is reached at the container input and output wheels, the top surface of each receiving member is flush with the top surface of the supporting mount so that containers are transferred onto and from the carousel along the same transfer plane.

After the welding of the overlapped edges of a tubular label, the displacement of the relative receiving member from the raised position to the fully retracted position produces the insertion of the relative container inside the label, making the so obtained container ready to be transferred to the output wheel.

Each label is retained on the lateral surface of the relative receiving member by suction; in particular, at least a region of the lateral surface of each receiving member is provided with a plurality of holes in turn connected to a pneumatic suction device.

In a completely analogous manner, each label is retained by suction on the label input wheel; during the transfer of the label from the label input wheel to the respective receiving member, suction is progressively cut on the label input wheel so that the label can be progressively released by the label input wheel and retained by suction on the receiving member.

In the case in which the label has to be applied on a container having a label receiving portion with oval cross-sections along planes orthogonal to its axis, the cylindrical receiving member used on the labelling machine for wrapping the label in the tubular configuration must necessarily have a circular profile circumscribing the largest oval cross-section of the container. The following heat-shrinking step performed on the tubular label leads this label to take the external profile of the label receiving portion of the container.

However, by using this kind of technique, a considerable waste of material occurs, due to the fact that the label should have a sufficient size to be wrapped along a cylinder circumscribing the largest oval cross-section of the container.

In addition, the quality of the print - images or words - on the label may be negatively affected by the heat-shrinking step in the zones where the requested shrinkage is particularly high.

It is an object of the present invention to provide a labelling unit, which allows to overcome at least one of the above drawbacks in a straightforward and low-cost manner.

This object is achieved by a labelling unit as claimed in claim 1.

The present invention also relates to a method for applying a label onto a non-cylindrical receiving portion of an article, as claimed in claim 11.

A non-limiting embodiment of the present invention will be described by way of example with reference to the accompanying drawings, in which:
Figure 1 shows a schematic top plan view, with parts removed for clarity, of a labelling machine provided with a plurality of labelling units in accordance with the teachings of the present invention;
Figure 2 shows a larger-scale top plan view of a part of the labelling machine of Figure 1, in proximity of a label transfer station;
Figure 3 shows a larger-scale view in perspective, with parts removed for clarity, of a labelling unit according to the present invention;
Figure 4 shows a larger-scale view in perspective, with parts removed for clarity, of a part of the labelling unit of Figure 3 in a different operating condition;
Figure 5 shows a larger-scale view in perspective of the part of the labelling unit of Figure 4;
Figure 6 shows a larger-scale section along line VI-VI in Figure 3;
Figure 7 shows a larger-scale section along line VII-VII in Figure 3; and
Figure 8 shows a larger-scale section along line VIII-VIII in Figure 5.

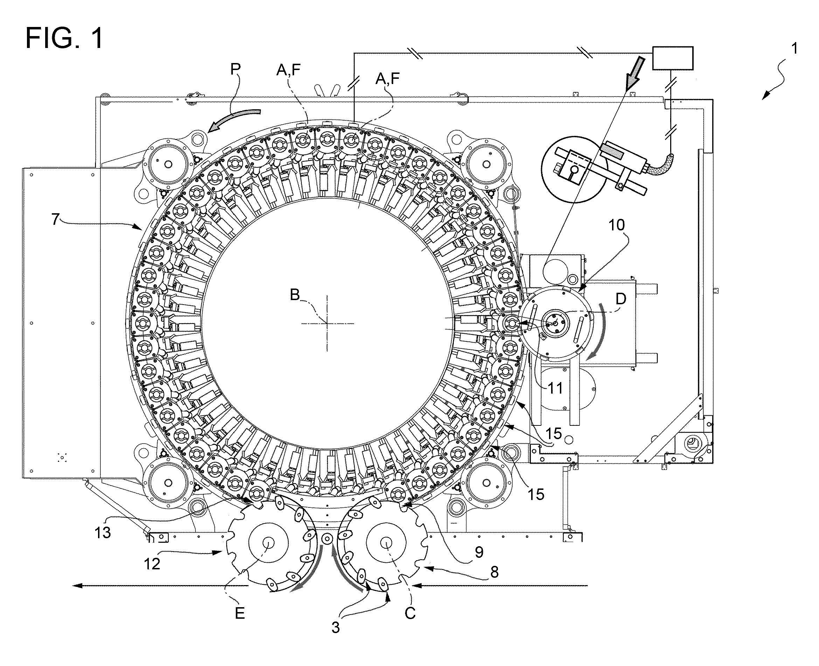

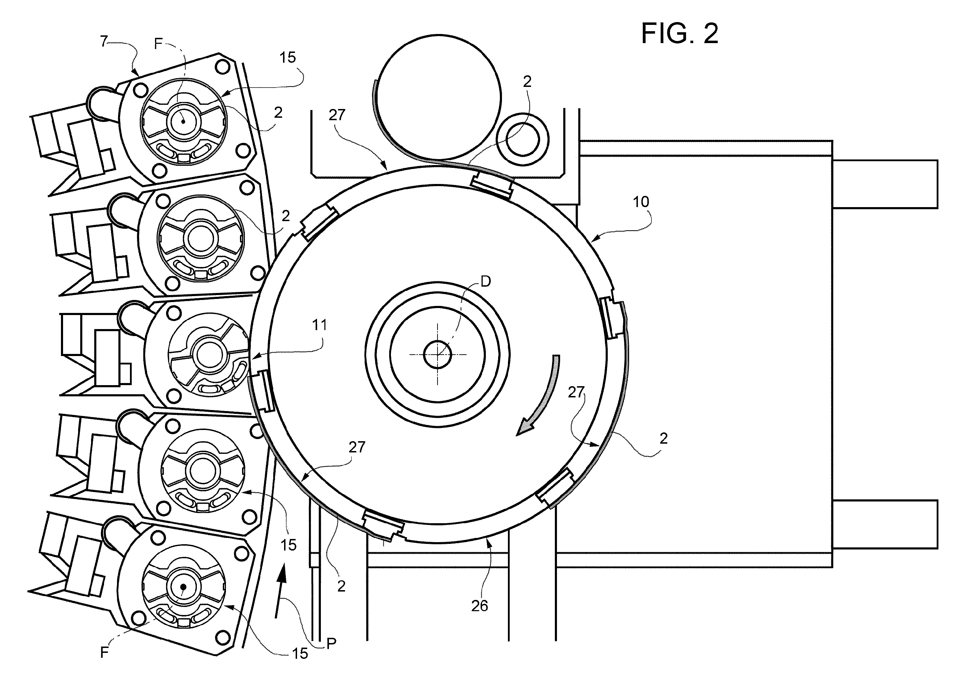

Number 1 in Figure 1 indicates as a whole a labelling machine for applying labels 2 (Figure 2) to respective articles or more specifically containers, particularly bottles 3 having non-cylindrical label receiving portions 6.

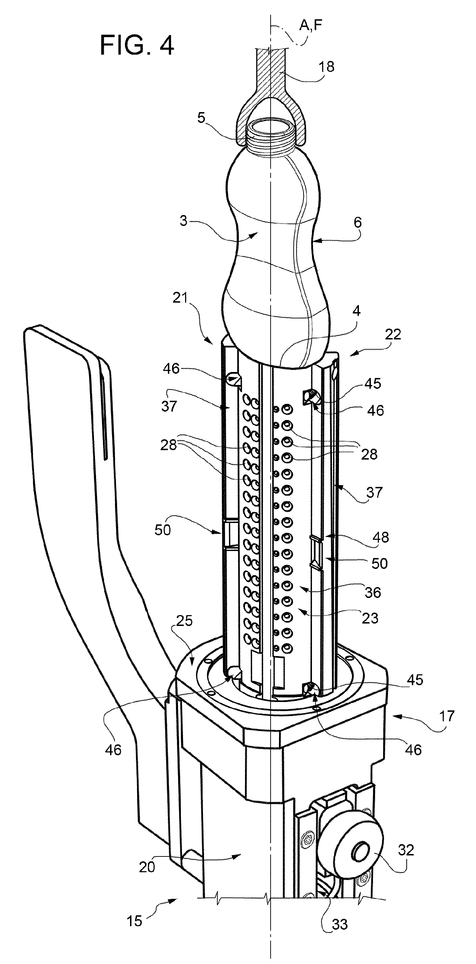

In particular, each bottle 3 (Figures 1 and 4) has a given longitudinal axis A, is bonded at the bottom by a bottom wall 4 substantially perpendicular to axis A, and has a top neck 5 substantially coaxial with axis A.

In the example shown, label receiving portion 6 of bottle 3 has an endless configuration about axis A and oval cross-sections along planes orthogonal to the axis A itself.

Machine 1 comprises a conveying device that serves to bend and weld labels 2 in a sleeve-like or endless configuration (Figure 2) and to produce insertion of bottles 3 into the so formed endless labels 2, while the labels 2 and the bottles 3 are continuously advanced.

In the preferred embodiment as illustrated in Figures 1 and 2, the conveying device comprises a carousel 7, which is mounted to rotate continuously (anticlockwise in Figure 1) about a vertical axis B perpendicular to the Figure 1 plane.

The carousel 7 receives a succession of unlabelled bottles 3 from an input wheel 8, which cooperates with carousel 7 at a first transfer station 9 and is mounted to rotate continuously about a respective longitudinal axis C parallel to axis B.

The carousel 7 also receives a succession of rectangular or square labels 2 from an input drum 10, which cooperates with carousel 7 at a second transfer station 11 and is mounted to rotate continuously about a respective longitudinal axis D parallel to axes B and C.

The carousel 7 releases a succession of labelled bottles 3 to an output wheel 12, which cooperates with carousel 7 at a third transfer station 13 and is mounted to rotate continuously about a respective longitudinal axis E parallel to axes B, C and D.

The carousel 7 comprises a number of labelling units 15, which are equally spaced about axis B, are mounted along a peripheral edge of carousel 7, and are moved by carousel 7 along a circular path P extending about axis B and through transfer stations 9, 11 and 13.

As shown in Figure 1, transfer station 11 is arranged, along path P, downstream from transfer station 9 and upstream from transfer station 13.

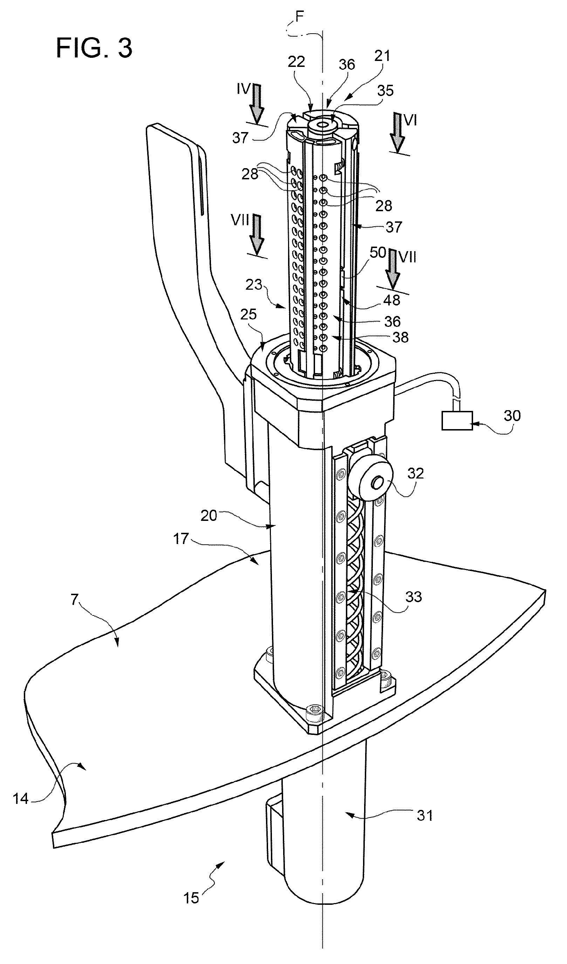

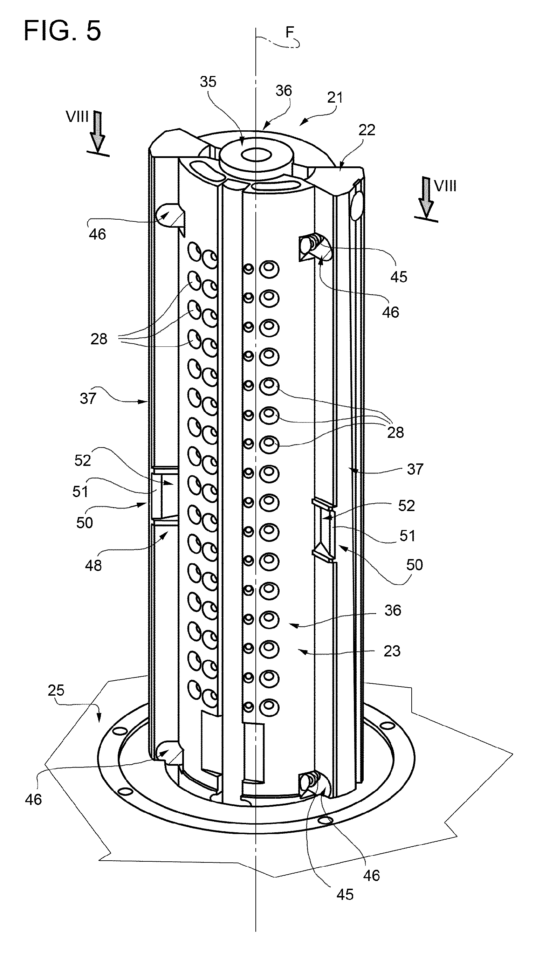

With reference to Figures 3 to 8, labelling units 15 are secured to a horizontal rotary table 14 of carousel 7, have respective axes F parallel to axes B, C, D, E and extend coaxially through respective holes (not shown) of the rotary table 14 and on both sides of such table.

Each labelling unit 15 is adapted to receive a relative bottle 3 from input wheel 8 in a vertical position, i.e. coaxially with the relative axis F (see in particular Figure 4), and to hold said bottle 3 in such position along path P from transfer station 9 to transfer station 13.

Labelling units 15 being identical to each other, only one is described below for the sake of simplicity and clarity; it is clear that the features described hereafter are common to all labelling units 15.

In particular, labelling unit 15 comprises, above rotary table 14 of carousel 7, a supporting assembly 17 adapted to support the bottom wall 4 of a relative bottle 3 and an upper retainer 18 (Figure 4) adapted to cooperate with the top neck 5 of the bottle 3.

In particular, supporting assembly 17 comprises:
- a hollow supporting mount 20 of axis F, which is secured to a top surface of rotary table 14 around the relative hole thereof; and
- a hollow receiving member 21 coupled to the supporting mount 20 in a translational and rotational manner with respect to axis F, and adapted to carry coaxially a relative bottle 3 on its top end 22 and a relative label 2 on the outer surface of its lateral wall 23.

Receiving member 21 can be moved along axis F between a fully retracted position within the relative supporting mount 20 and a raised position (Figures 3 to 5).

In the fully retracted position, receiving member 21 is completely housed within the relative supporting mount 20 so that its top end 22 is flush with a top surface 25 of the supporting mount 20.

In the raised position, receiving member 21 protrudes from the top surface 25 of the supporting mount 20 and is adapted to receive, on the outer surface of its lateral wall 23, a relative label 2 from input drum 10.

More specifically, labels 2 are cut in a know manner from a web (not shown) and fed to input drum 10 to be then transferred to the respective receiving members 21 in the raised position.

As shown in Figure 2, the cut labels 2 are retained on a lateral surface 26 of input drum 10 by suction; in fact, the lateral surface 26 of input drum 10 is divided into a given number, three in the embodiment shown, of suction regions 27, which are equally spaced about axis D, are each provided with a plurality of through holes (known per se and not shown) connected to a pneumatic suction device (known per se and not shown) and are adapted to cooperate with respective labels 2.

In a completely analogous manner (Figures 3-5), lateral wall 23 of receiving member 21 is provided with a plurality of through holes 28, in turn connected to a pneumatic suction device 30 (only schematically shown in Figure 3) so as to retain the relative label 2 on its outer surface by suction.

At the transfer station 11, receiving member 21 can be rotated about the relative axis F in order to produce the complete wrapping of the respective label 2, coming from input drum 10, on the outer surface of its lateral wall 23. In particular, each label 2, fed by input drum 10, is wrapped around the corresponding receiving member 21 in the raised position so as to form a sleeve or an endless sheet.

As it appears from above, receiving member 21, during its travel along path P with the other components of labelling unit 15, is subjected to distinct movements in different operative steps of the labelling machine 1:
- a displacement along axis F from the fully retracted position to the raised position, after a bottle 3 has been transferred to labelling unit 15;
- a rotational movement about axis F to receive a relative label 2 from input drum 10 and to allow bending of such label in an endless or sleeve configuration; and
- a displacement from the raised position to the fully retracted position to allow insertion of the bottle 3 within the label 2 welded in the endless or sleeve configuration.

The rotational movement is obtained by means of an actuator assembly 31 (known per se and only schematically shown in Figure 3) arranged underneath rotary table 14 and secured to a bottom surface of the rotary table 14 itself.

Actuator assembly 31 comprises a driving shaft (not shown) extending coaxially through supporting mount 20 and rotationally coupled to receiving member 21.

The translational displacements along axis F are instead obtained by cooperation of a fixed cam (known per se and not shown) extending along path P and a cam follower 32 coupled to receiving member 21 and protruding radially outwards from a vertical through slot 33 of supporting mount 20, i.e. from a slot extending parallel to axis F.

With reference to Figures 3 to 8, receiving member 21 basically comprises a tubular core 35, angularly coupled in use to the driving shaft of actuator assembly 31, and a plurality of distinct vertical sectors 36, 37, which are angularly distributed around core 35 and axis F to define lateral wall 23 and which can be moved with respect to each other orthogonally to axis F.

Receiving member 21 can be advantageously set in a first cylindrical configuration (Figures 3, 6 and 7) coaxial to axis F, during wrapping of one label 2 around its lateral wall 23, and, in a second non-cylindrical configuration (Figures 4, 5 and 8) by moving sectors 36, 37 with respect to each other after the label 2 has been welded in the endless configuration and prior to inserting bottle 3 into the endless label 2.

In the example shown in Figures 3 to 8, lateral wall 23 of receiving member 21 is made up of four distinct vertical sectors 36, 37: two of them, indicated with 36, have the same structures and define respective diametrically opposite side portions of lateral wall 23, both having curved and convex shapes; the other two sectors, indicated with 37, have the same structures, different from the ones of sectors 36, and are defined by diametrically opposite slice portions of lateral wall 23, also having curved and convex shapes and angularly interposed between sectors 36; sectors 37 have smaller angular extensions around axis F than sectors 36.

In the first cylindrical configuration, sectors 36 and 37 define an external cylindrical surface 38 (Figures 3, 6 and 7), around which label 2 is in use wrapped to take a tubular configuration; in the second non-cylindrical configuration (Figures 4, 5 and 8), sectors 37 radially protrude from the circumferential outline defined by receiving member 21 in the first cylindrical configuration, whilst sectors 36 are brought closer to one another and to core 35 in such a way that the label 2 wrapped around the modified lateral wall 23 takes an endless configuration with an oval cross-section along a plane orthogonal to axis F.

As during the passage from the first cylindrical configuration to the second non-cylindrical configuration, sectors 37 are moved away from core 35 and sectors 36 are simultaneously brought closer to the core 35 itself, the overall surface of the label 2 is substantially maintained after the transformation so minimizing possible tensions on the plastic material of the label 2.

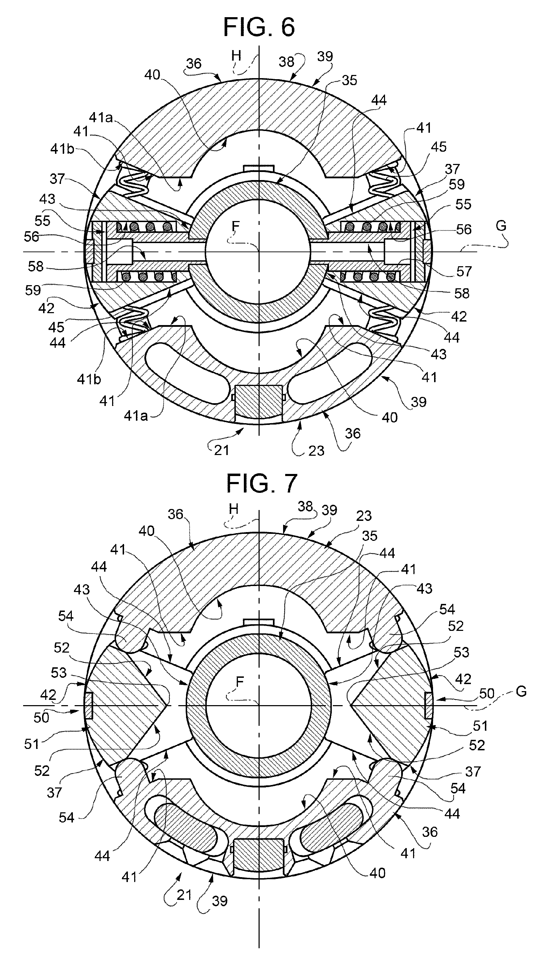

With particular reference to Figures 6, 7 and 8, each sector 36 is delimited by a radially outer, arc-shaped convex surface 39, by a radially inner arc-shaped concave surface 40, facing core 35, and by two edge side surfaces 41, which connect surfaces 39 and 40 and face respective sectors 37.

In the first cylindrical configuration of receiving member 21, sectors 36 are radially spaced from core 35 (see Figures 6 and 7); in the second non-cylindrical configuration of receiving member 21, surfaces 40 of sectors 36 are in direct contact with diametrically opposite arc-shaped portions of the outer surface of core 35.

Each sector 37 is delimited by a radially outer arc-shaped convex surface 42, by a radially inner arc-shaped concave surface 43, facing core 35, and by two side surfaces 44, facing corresponding side surfaces 41 of respective sectors 36 and extending radially with respect to axis F; hence, side surfaces 41 of each sector 37 are parallel to axis F and converge towards the axis F itself.

It should be noted that each side surface 41 of sectors 36 is formed by two flat and angled portions, one of which, designated with 41a, is adjacent to the respective surface 40, and the other one, designated with 41b, is adjacent to the respective surface 39 and is parallel to the facing side surface 44 of the respective sector 37.

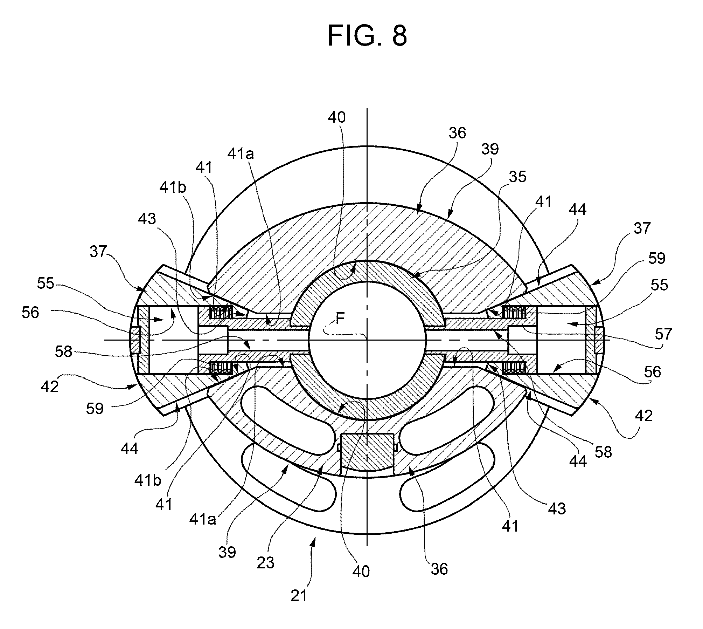

In the first cylindrical configuration of receiving member 21, surfaces 43 of sectors 37 are entirely in direct contact with diametrically opposite arc-shaped portions of the outer surface of core 35 (see Figures 6 and 7), whilst each side surface 41 of sectors 36 is in direct contact with the corresponding facing side surface 44 of the respective sector 37 only at an intermediate region 48 of the receiving member 21 (see Figures 4 to 7), as it will be explained in greater details hereafter; in the second non-cylindrical configuration of receiving member 21, sectors 37 are radially spaced from core 35 and have their side surfaces 44 entirely in direct contact with portions 41b of corresponding side surfaces 41 of respective sectors 36 (see Figure 8).

Sectors 36 are maintained in continuous contact with sectors 37 by a plurality of helical springs 45 interposed between each pair of facing side surfaces 41 of sectors 36; in the example shown, receiving member 21 comprises two springs 45 for each pair of facing side surfaces 41 of the sectors 36: two of the springs 45 are carried by a top end portion of receiving member 21, whilst the other two springs 45 are carried by a bottom end portion of receiving member 21.

Each spring 45 engages a respective through slot 46 of the corresponding sector 37 with play in a first direction G, extending orthogonally and radially with respect to axis F and defining the direction of movement of the sectors 37.

Springs 45 extend parallel to a second direction H, orthogonal to axis F and direction G, and are configured to exert a load on sectors 36 tending to bring them closer to one another and to core 35 along such direction G.

As shown in particular in Figures 4 to 7, receiving member 21 further comprises cam means 50 provided in the intermediate region 48 and interposed between each side surface 41 of sectors 36 and the corresponding facing side surface 44 of the respective sector 37.

Cam means 50 are configured:
- to convert a displacement of sectors 37 along direction G away from core 35 to a displacement of sectors 36 along direction H towards core 35 and under the thrust exerted by springs 45; and
- to convert a displacement of sectors 37 along the direction G towards core 35 to a displacement of sectors 36 along direction H away from core 35 and against the thrust exerted by springs 45.

In particular, cam means 50 comprise, for each sector 37, a wedge-shaped portion 51, formed in the sector 37 itself at intermediate region 48 and having opposite sloping sides 52 extending parallel to axis F and converging to each other at a common pointed edge 53, facing core 35 and spaced therefrom; cam means 50 further comprise two cam followers 54, which are defined by respective protruding ribs of facing side surfaces 41 of sectors 36 and which slide in use along respective sides 52 of wedge-shaped portion 51.

Sloping sides 52 of wedge-shaped portion 51 of each sector 37 are located on opposite sides of direction G of movement of the sector 37 itself and have identical inclinations with respect to such direction.

According to a possible alternative not shown, wedge-shaped portion 51 may be replaced by a portion of sector 37 simply delimited by two side cam surfaces extending parallel to axis F, converging towards the axis F itself, but not defining a common pointed edge.

The transformation of receiving member 21 from the first cylindrical configuration to the second non-cylindrical configuration and vice versa is accomplished by means of two actuators 55 interposed between core 35 and the sectors 37 to move such sectors 37 along direction G.

In the example shown in Figures 3, 4, 5, 6 and 8, actuators 55 are carried by receiving member 21 and are arranged close to the top end 22 thereof in positions adjacent to the respective springs 45.

With particular reference to Figures 6 and 8, each actuator 55 extends parallel to direction G and basically comprises:
- a radial cylindrical chamber 56 formed in the respective sector 37 and which is open towards core 35 and closed on the opposite side by surface 42;
- a pin 57 secured to core 35 in a radially protruding position, having a through hole 58 connected with the inside of the core 35 and engaging chamber 56 so that the sector 37 can slide along the pin 57 itself in direction G; and
- a helical spring 59 wrapped around pin 57, interposed between respective facing annular abutments of the chamber 56 and the pin 57 and exerting a thrust on the sector 37 to maintain it in direct contact with core 35.

By supplying compressed air to holes 58 of pins 57 of actuators 55, for instance through the inside of core 35, springs 59 are compressed and sectors 37 slide outwardly along the pins 57 in direction G; the outward movement of sectors 37 produces, through cam means 50 and springs 45, corresponding displacements of sectors 36 towards core 35 in direction H, so defining the second non-cylindrical configuration of receiving member 21.

According to possible alternatives not shown, fluidic actuators 55 may be replaced by other types of actuators, such as electrically driven actuators, or even by lever or cam means.

According to another possible alternative not shown, receiving member 21 may be also formed by only two distinct sectors, one of which movable with respect to the other orthogonally to axis F; in this way, the second non-cylindrical configuration may be obtained by simply moving one sector with respect to the other after the label 2 has been welded in the endless configuration and prior to inserting the bottle 3 into the endless label 2.

Operation of labelling machine 1 will now be described with reference to the labelling of one bottle 3, and therefore to one labelling unit 15, and as of the instant in which the receiving member 21 of such labelling unit 15 is in the raised position and in the first cylindrical configuration (Figures 3, 6 and 7) and supports the unlabelled bottle 3 received from input wheel 8.

In particular, in this condition, the bottle 3, which rests on top end 22 of receiving member 21, is hold in the vertical position by the combined action of the receiving member 21 and the respective upper retainer 18.

At the transfer station 11, the input drum 10 reaches an angular position around axis D adapted to put the label 2 into contact with the receiving member 21 passing through such station; in this condition, a pure rotational movement of receiving member 21 around axis F is required to produce complete wrapping of the label 2 in a known manner around such receiving member 21.

At the end of rotation of receiving member 21 about axis F, the label 2 reaches a tubular configuration with opposite vertical edges overlapped one another (see Figure 2); then, the label 2 is welded along the overlapped edges.

At this point, by supplying compressed air to holes 58 of pins 57 of actuators 55 through the inside of core 35, springs 59 are compressed and sectors 37 slide outwardly along the pins 57 in direction G.

The outward movement of sectors 37 produces, through cam means 50 and springs 45, corresponding displacements of sectors 36 towards core 35 in direction H. In particular, as sectors 37 move away from core 35, sectors 36 are subjected to the thrust of springs 45, which tend to bring such sectors 36 closer to core 35. More specifically, sectors 36 slide through their cam followers 54 along sloping sides 52 of wedge-shaped portion 51 of sectors 37.

At the end of these movements, receiving member 21 reaches the second non-cylindrical configuration (Figures 4, 5 and 8); as a consequence, the label 2 takes an endless configuration with an oval cross-section along a plane orthogonal to axis F.

During the last part of the path P, the receiving member 21 is moved back to the fully retracted position within the relative supporting mount 20, so as to produce the insertion of the bottle 3 inside the so formed endless label 2.

A heat-shrinking step (not shown) can be then performed on the bottles 3 exiting from carousel 7 to obtain shrinking and adhesion of the label 2 to the bottle external surface.

The advantages of the labelling machine 1 and labelling units 15 according to the present invention will be clear from the above description.

In particular, receiving member 21 is used in its conventional cylindrical configuration during the step of wrapping the label 2 around its lateral wall 23 and is set the non-cylindrical configuration, corresponding to that one of the label receiving portion 6 of the bottle 3, just prior to inserting such bottle 3 into the endless label 2.

In this way, during the label wrapping step, receiving member 21 maintains a constant peripheral speed and a constant distance from input drum 10 so easing the transfer of the label 2.

The change of configuration of receiving member 21 only occurs when strictly needed, i.e. after the welding of the label 2 into the endless configuration and prior to inserting the bottle 3 into such endless label 2.

This solution is highly flexible as it permits to obtain different non-cylindrical configurations of the receiving member 21 adapted to different configurations of the bottles to be labeled.

Thanks to the fact that, during the passage from the first cylindrical configuration to the second non-cylindrical configuration, sectors 37 are moved away from core 35 and sectors 36 are simultaneously brought closer to the core 35 itself, the overall surface of the label 2 in both configurations is substantially maintained so minimizing possible tensions on the label 2 and the amount of material used for each label 2. In addition, the shrinkage applied to the label 2 to adhere to the label receiving portion 6 of the bottle 3 is very limited, with no negative consequence on the quality of the print present on the label 2.

Clearly, changes may be made to labelling machine 1 and labelling units 15 as described and illustrated herein without, however, departing from the scope of protection as defined in the accompanying claims.

## Claims

1. A labelling unit (15) for applying a label (2) onto a non-cylindrical label receiving portion (6) of an article (3); said labelling unit (15) comprising:
- support means (20); and
- a receiving member (21) adapted to carry said article (3) as well as to receive said label (2), and supported by said support means (20) in a translational manner along a given axis (F);
wherein said receiving member (21) is movable along said axis (F) between:
- a raised position, in which said receiving member (21) axially protrudes from said support means (20), carrying said article (3) on its top portion (22), and is adapted to receive said label (2) wrapped around its lateral wall (23); and
- a retracted position, in which said receiving member (21) is housed within said support means (20) so as to permit insertion of said article (3) into the label (2) welded in an endless or sleeve configuration;
**characterized in that** said receiving member (21) comprises at least two distinct sectors (36, 37), at least one of which movable with respect to the other transversely to said axis (F), and **in that** said receiving member (21) is set in a first cylindrical configuration, during wrapping of said label (2) around its lateral wall (23), and, in a second non-cylindrical configuration by moving said at least one of said sectors (36, 37) with respect to the other after said label (2) has been welded in the endless configuration and prior to inserting said article (3) into the endless label (2).

2. The labelling unit as claimed in claim 1, wherein, in said non-cylindrical configuration, said at least one of said sectors (36, 37) radially protrudes from the circumferential outline defined by said receiving member (21) in said cylindrical configuration.

3. The labelling unit as claimed in claim 1 or 2, further comprising actuator means (55) carried by said receiving member (21) and which are selectively activated to move said at least one of said sectors (36, 37) with respect to the other.

4. The labelling unit as claimed in any one of the foregoing claims, wherein said receiving member (21) comprises a core (35) coaxial to said axis (F), and wherein said sectors (36, 37) are angularly distributed around said core (35) and define said lateral wall (23) of said receiving member (21).

5. The labelling unit as claimed in claim 4, wherein said sectors (36, 37) of said receiving member (21) comprise two first sectors (37), diametrically opposite one another with respect to said axis (F) and having the same structures, and two second sectors (36) angularly interposed between said first sectors (37) and also having the same structures.

6. The labelling unit as claimed in claim 5, wherein said actuator means (55) are interposed between each first sector (37) and said core (35) and are selectively activated to move said first sectors (3) away from and towards said core (35).

7. The labelling unit as claimed in claim 5 or 6, wherein said receiving member (21) further comprises cam means (50) interposed between each said first sector (37) and said second sectors (36) and configured to convert a displacement of said first sectors (37) away from/towards said core (35) to a displacement of said second sectors (36) towards/away from said core (35).

8. The labelling unit as claimed in claim 7, wherein said cam means (50) comprise a cam portion (51) formed in each of said first sectors (37) and having opposite sloping cam surfaces (52) extending parallel to said axis (F), converging to each other towards said axis (F), and cooperating in sliding manner with respective facing cam followers (52) carried by said second sectors (36).

9. The labelling unit as claimed in claim 8, wherein said cam surfaces (52) of each first sector (37) are located on opposite sides of a direction (G) of movement of said first sector (37) and have identical inclinations with respect to said direction (G).

10. The labelling unit as claimed in any one of claims 5 to 9, wherein said receiving member (21) further comprises spring means (45) to maintain said second sectors (36) in continuous contact with said first sectors (37).

11. A method for applying a label (2) onto a non-cylindrical receiving portion (6) of an article (3); said method comprising the steps of:
- providing a receiving member (21) movable with respect to support means (20) along an axis (F) between a raised position, in which said receiving member (21) axially protrudes from said support means (20), and a retracted position, in which said receiving member (21) is housed within said support means (20);
- feeding said article (3) on a top portion of said receiving member (21);
- wrapping said label (2) around a lateral wall (23) of said receiving member (21) in said raised position;
- welding said label (2) in an endless or sleeve-like configuration; and
- moving said receiving member (21) to said retracted position so as to permit insertion of said article (3) into said label (2) welded in said endless or sleeve configuration;
**characterized in that** said receiving member (21) comprises at least two distinct sectors (36, 37), at least one of which movable with respect to the other transversely to said axis (F); **in that** said receiving member (21) is set in a first cylindrical configuration, during said step of wrapping of said label (2); and **in that** at least one of said sectors (36, 37) is moved with respect to the other to set said receiving member (21) in a second non-cylindrical configuration after said label (2) has been welded in the endless configuration and prior to inserting said article (3) into the endless label (2).

12. The method as claimed in claim 11, wherein said receiving member (21) comprises a core (35) coaxial to said axis (F), around which said sectors (36, 37) are angularly distributed to define said lateral wall (23), and wherein said sectors (36, 37) are moved with respect to each other to maintain the overall surface of said label (2) in both configurations of the receiving member (21).

13. The method as claimed in claim 12, wherein at least one (37) of said sectors (36, 37) is moved away from said core (35) and at least another one (36) of said sectors (36, 37) is brought closer to said core (35) during the change of configuration of said receiving member (21).
